# EUROPÄISCHE PATENTSCHRIFT

(11) **EP 2 822 857 B1**
(45) Veröffentlichungstag und Bekanntmachung des Hinweises auf die Patenterteilung: **14.09.2016**
(21) Anmeldenummer: 13711844.4
(22) Anmeldetag: 05.03.2013
(51) Int. Cl.: B65B 57/00, B65B 9/04, B65B 25/06, B65G 43/00

(54) **VERPACKUNGSLINIE**
PACKAGING LINE
LIGNE D'EMBALLAGE

(30) Priorität: 07.03.2012 DE 102012004341
(43) Veröffentlichungstag der Anmeldung: 14.01.2015
(73) Patentinhaber: GEA Food Solutions Germany GmbH, 35216 Biedenkopf-Wallau (DE)
(72) Erfinder: MOREIRA, Nelson da Costa, 35216 Biedenkopf (DE); NAEHER, Tilman, 87487 Wiggensbach (DE); REIN, Rolf, 35236 Breidenbach (DE)
(74) Vertreter: Wolff, Felix
(86) Internationale Anmeldenummer: PCT/EP2013/054307
(87) Internationale Veröffentlichungsnummer: WO 2013/131863

(56) Entgegenhaltungen:
- EP-A1- 1 323 634
- WO-A1-02/16210
- WO-A1-2004/113030
- US-A1- 2003 205 034

## Beschreibung

Die vorliegende Erfindung betrifft eine Verpackungslinie, vorzugsweise eine Lebensmittelverpackungslinie, mit einer Verpackungsmaschine und mindestens einer weiteren Komponente, wobei die Verpackungsmaschine und die Komponente jeweils zumindest teilweise eine lokale Steuerung, beispielsweise eine Speicher-programmierbare Steuerung aufweisen und die Verpackungslinie eine Linien-Regelung/Steuerung aufweist. Des Weiteren betrifft die vorliegende Erfindung ein Verfahren zum Betrieb einer Verpackungslinie mit einer Verpackungsmaschine und mindestens einer weiteren Komponente, wobei die Verpackungsmaschine und jede Komponente jeweils zumindest teilweise eine lokale Regelung/Steuerung aufweisen und die Verpackungslinie eine Linien-Regelung/Steuerung aufweist.

Derartige Lebensmittelverpackungslinien sind aus dem Stand der Technik, beispielsweise der EP 1 323 634 A, bekannt und werden dazu eingesetzt Lebensmittel, insbesondere proteinhaltige Lebensmittel, wie beispielsweise Wurst, Käse oder Schinken aber auch Frischfleisch und dergleichen in Verpackungen einzupacken. Eine derartige Lebensmittelverpackungslinie weist neben einer Verpackungsmaschine, beispielsweise eine Form-Füll-Siegel-Verpackungsmaschine (FFS-Verpackungsmaschine) oder ein sogenannter Traysealer, noch mindestens eine weitere Komponente auf, die sich stromaufwärts und/oder stromabwärts von der Verpackungsmaschine befindet. Dabei kann es sich beispielsweise um eine Aufschneidevorrichtung, eine Beladeeinrichtung, und/oder einen Portionierer, der beispielsweise eine Hackfleischmasse in bestimmte Portionen aufteilt und/oder formt, und/oder um eine Packungsvereinzelungsmaschine, die mehrbahnig ankommende Verpackungsströme in beispielsweise einen einbahnigen Verpackungsstrom aufreiht und/oder einen Detektor, mit dem beispielsweise metallische Fremdeinschlüsse in der Verpackung erkannt werden und/oder einen Scanner, mit dem die äußere Kontur und/oder die innere Struktur beispielsweise eines Lebensmittelriegels bestimmt wird, handeln. Derartige Lebensmittelverpackungslinien können eine beträchtliche Länge aufweisen. Bei den Lebensmittelverpackungslinien gemäß dem Stand der Technik weisen die Verpackungsmaschine und zumindest teilweise jede weitere Komponente eine lokale Bedieneinheit auf, mit der die Verpackungsmaschine bzw. jede weitere Komponente eingestellt werden kann und an der ein aufgetretener Fehler, nach dessen Behebung, quittiert werden kann. Des Weiteren weisen die Lebensmittelverpackungslinien gemäß dem Stand der Technik eine Linienkontrolle mit einer separaten Bedieneinheit auf, die die Linie steuert und von der aus die Linie gestartet und/oder gestoppt werden kann. Im Falle eines Fehlers an der Verpackungsmaschine oder einer weiteren Komponente muss das Bedienpersonal zunächst zu dieser Einheit laufen, den Fehler feststellen, beheben und quittieren. Danach muss das Bedienpersonal zu der Linienkontrolle laufen und von dort aus die Linie wieder starten. Dadurch entsteht entweder eine erhebliche Stillstandszeit der Lebensmittelverpackungslinie und/oder es muss sehr viel Personal vorgehalten werden, um auftretende Fehler schnell beheben zu können.

Es war deshalb die Aufgabe der vorliegenden Erfindung eine Verpackungslinie, insbesondere eine Lebensmittelverpackungslinie und ein Verfahren zum Betrieb einer Verpackungslinie, insbesondere einer Lebensmittelverpackungslinie zur Verfügung zu stellen, die die Nachteile des Standes der Technik nicht aufweist.

Gelöst wird die Aufgabe mit einer Verpackungslinie gemäß Anspruch 1.

Die vorliegende Erfindung betrifft eine Verpackungslinie, insbesondere eine Lebensmittelverpackungslinie. Derartige Lebensmittelverpackungslinien werden dazu eingesetzt Lebensmittel, insbesondere proteinhaltige Lebensmittel, wie beispielsweise Wurst, Käse oder Schinken aber auch Frischfleisch und dergleichen in Verpackungen einzupacken. Erfindungsgemäß weist die Lebensmittelverpackungslinie neben einer Verpackungsmaschine, beispielsweise eine Form-Füll-Siegel-Verpackungsmaschine (FFS-Verpackungsmaschine) oder ein sogenannter Traysealer, noch mindestens eine weitere Komponente auf, die sich stromaufwärts und/oder stromabwärts von der Verpackungsmaschine befindet. Dabei kann es sich beispielsweise um eine Waage, einen Scanner, mit dem die äußere Kontur und/oder die innere Struktur beispielsweise eines Lebensmittelriegels bestimmt wird, eine Aufschneidevorrichtung, eine Beladeeinrichtung, und/oder einen Portionierer, der beispielsweise eine Hackfleischmasse in bestimmte Portionen aufteilt und/oder formt und/oder um eine Packungsvereinzelungsmaschine, die mehrbahnig ankommende Verpackungsströme in beispielsweise einen einbahnigen Verpackungsstrom aufreiht und/oder einen Detektor, mit dem beispielsweise metallische Fremdeinschlüsse in der Verpackung erkannt werden, handeln. Eine weitere Komponente der Lebensmittelverpackungslinie kann aber auch noch ein Etikettierter oder ein Drucker zum Bedrucken von Etiketten sein.

Die Linien-Regelung/Steuerung kann Teil der lokalen Steuerung sein bzw. eine eigene Einheit außerhalb einer Komponente bzw. der Verpackungsmaschine sein.

Weiterhin erfindungsgemäß weisen die Verpackungsmaschine und die weitere(n) Komponente(n), zumindest teilweise eine lokale Regelung/Steuerung auf. Diese Regelungen/Steuerungen steuern/regeln die Funktion der Verpackungsmaschine bzw. der jeweiligen Komponente. Erfindungsgemäß ist zusätzlich eine Linien-Regelung/Steuerung, vorhanden, mit der die Funktion der Linie gesteuert/geregelt wird.

Erfindungsgemäß weisen nun die Verpackungsmaschine und zumindest teilweise jede Komponente jeweils eine Bedieneinheit, beispielsweise ein Bedienpanel, auf und die Linien-Regelung/Steuerung ist von mehreren Bedieneinheiten, vorzugsweise von allen, aus ansteuerbar vorgesehen. Dadurch ist es erfindungsgemäß möglich, die Lebensmittelverpackungslinie von jeder Bedieneinheit aus zu steuern. Ebenso ist es erfindungsgemäß möglich, einen Fehler, der an der Verpackungsmaschine oder einer Komponente auftritt, lokal zu beheben und die Lebensmittelverpackungslinie von dieser Bedieneinheit aus wieder zu starten. Das Bedienpersonal muss demnach nicht, beispielsweise erst den Fehler lokal beheben und dann zu der Bedieneinheit der Linien-Regelung/Steuerung laufen, um von dort aus die Lebensmittelverpackungslinie neu zu starten. Folglich werden die Wege, die das Bedienpersonal beispielsweise für die Behebung eines Fehlers zurücklegen muss, erheblich reduziert.

Ein bevorzugter Gegenstand der vorliegenden Erfindung ist eine Lebensmittelverpackungslinie, bei der von jeder Bedieneinheit Daten von der Verpackungsmaschine und jeder anderen Komponente der Lebensmittelverpackungsline abrufbar sind. Durch diese erfindungsgemäße oder bevorzugte Ausführungsform der vorliegenden Erfindung ist es möglich Statusmeldungen der Verpackungsmaschine oder einer anderen Komponente von der Bedieneinheit der Verpackungsmaschine oder jeder anderen Komponente aus einzusehen und Fehlermeldungen gegebenenfalls zu quittieren.

Ein bevorzugter Gegenstand der vorliegenden Erfindung ist eine Verpackungslinie, insbesondere eine Lebensmittelverpackungslinie, die vorzugsweise eine, insbesondere mobile Bedieneinheit für die Verpackungsmaschine und/oder jede weitere Komponente aufweist. Insbesondere weist die Lebensmittelverpackungslinie bei dieser erfindungsgemäßen oder bevorzugten Ausführungsform der vorliegenden Erfindung weniger Bedieneinheiten als Verpackungsmaschine plus Komponente(n) auf. Vorzugsweise weist die erfindungsgemäße oder bevorzugte Lebensmittelverpackungslinie lediglich eine einzige Bedieneinheit auf. Insbesondere handelt es sich bei dieser Bedieneinheit um eine mobile Bedieneinheit, mit der die Verpackungsmaschine und jede andere Komponente der Verpackungslinie bedient und/oder programmiert werden kann und mit der die Verpackungslinie gesteuert, also beispielsweise gestartet und gestoppt, werden kann. Von der mobilen Bedieneinheit aus kann beispielsweise der Status der Verpackungsmaschine und jeder anderen Komponente der Lebensmittelverpackungslinie abgefragt werden. Vorzugsweise kommuniziert die mobile Bedieneinheit drahtlos mit einer Sende-/Empfangseinheit der Lebensmittelverpackungslinie. Alternativ oder zusätzlich können von der Bedieneinheit aus Fehlermeldungen an der Verpackungsmaschine oder jeder anderen Komponente quittiert werden. Des Weiteren ist es möglich, mit der mobilen Bedieneinheit eine Rezeptänderung vorzunehmen. Dadurch, dass lediglich eine mobile Einheit vorgesehen ist, muss die Lebensmittelverpackungslinie lediglich eine Sende-/Empfangseinheit aufweisen. Dadurch können beispielsweise die Verkabelungslänge innerhalb der Lebensmittelverpackungslinie erheblich reduziert werden und es können mehrere Bedieneinheiten eingespart werden.

Ein bevorzugter Gegenstand der vorliegenden Erfindung ist eine Lebensmittelverpackungslinie, bei der die lokalen Speicher-programmierbaren Steuerungen bidirektional Daten und/oder Befehle austauschen. Diese erfindungsgemäße oder bevorzugte Ausführungsform der vorliegenden Erfindung erlaubt es, dass zwischen den lokalen Speicher-programmierbaren Steuerungen Daten bzw. Befehle ausgetauscht werden. Dadurch ist es möglich den Status der Verpackungsmaschine oder jeder anderen Komponente von der Bedieneinheit jeder anderen Komponente aus abzufragen, Fehlermeldungen zu quittieren und beispielsweise von einer Bedieneinheit aus die Rezeptur der Lebensmittelverpackungslinie zu ändern bzw. die gesamte Lebensmittelverpackungslinie zu steuern, also auch zu starten und stoppen. Weiterhin bevorzugt ist es möglich von jeder lokalen Regelung/Steuerung aus auch auf die Linien-Regelung/Steuerung zuzugreifen.

Ein weiterer Gegenstand der vorliegenden Erfindung ist ein Verfahren zum Betrieb einer Verpackungsmaschine, insbesondere einer Lebensmittelverpackungslinie nach Anspruch 5.

Durch das erfindungsgemäße Verfahren ist es möglich, einen Fehler, der an der Verpackungsmaschine oder einer Komponente auftritt, lokal zu beheben, den Fehler zu quittieren und die Lebensmittelverpackungslinie von dieser Bedieneinheit aus wieder zu starten. Das Bedienpersonal muss demnach nicht erst den Fehler lokal beheben und dann zu der Bedieneinheit der Linien-Regelung/Steuerung laufen, um von dort aus die Lebensmittelverpackungslinie neu zu starten. Folglich werden die Wege, die das Bedienpersonal für die Behebung eines Fehlers zurücklegen muss, erheblich reduziert, wodurch die Laufzeit der Lebensmittelverpackungslinie erheblich erhöht wird.

Vorzugsweise werden die Verpackungsmaschine und die andere Komponente(n) der erfindungsgemäßen Verpackungsmaschine in einer bestimmten Reihenfolge gestoppt oder gestartet. Vorzugsweise erfolgen das Starten und das Stoppen der erfindungsgemäßen Verpackungslinie so, dass möglichst wenig Lebensmittel bzw. Verpackungen verworfen werden müssen.

Ein bevorzugter Gegenstand der vorliegenden Erfindung ist ein Verfahren, bei dem jede lokale Regelung/Steuerung eine vordefinierte Funktionsabfolge der Lebensmittelverpackungslinie initiiert und/oder steuert/regelt. Durch das erfindungsgemäße oder bevorzugte Verfahren ist es möglich die Lebensmittelverpackungslinie von jeder Bedieneinheit aus zu steuern, insbesondere zu starten und zu stoppen. Gleichzeitig oder alternativ können von jeder Bedieneinheit aus Veränderungen an dem Lebensmittelverpackungsverfahren vorgenommen werden. Beispielsweise kann von jeder Bedieneinheit aus die Rezeptur der herzustellenden Verpackungen geändert werden.

Ein bevorzugter Gegenstand der vorliegenden Erfindung ist deshalb ein Verfahren bei dem eine Rezepturänderung von einer beliebigen Bedieneinheit aus durchgeführt wird. Die Rezeptur muss nicht mehr von dem Bedienpult der Liniensteuerung aus geändert werden. Dies kann von der Bedieneinheit der Verpackungsmaschine oder einer anderen Komponente aus erfolgen.

Vorzugsweise kann von der Bedieneinheit der Verpackungsmaschine oder jeder anderen Komponente aus auf eine zentrale Rezepturverwaltung zugegriffen werden. Diese zentrale Rezepturverwaltung beinhaltet die jeweiligen Rezepturprogramme für Verpackungsmaschine bzw. für jede Einzelkomponente. Beispielsweise weisen die Programme unterschiedliche Nummern/Namen auf und die Programme sind auf die Verpackungsmaschine bzw. jede Einzelkomponente abgestimmt hinterlegt. Ein derartiges Rezepturprogramm kann beispielsweise Daten darüber enthalten welches Produkt von einer Aufschneidevorrichtung aufgeschnitten werden soll, das Gewicht der jeweiligen Portionen bzw. die Konfigurationen (beispielsweise Stapeln oder Schindeln) sowie die Art der Verpackung, in der die jeweilige Verpackung verpackt werden soll. Weiterhin kann das Rezepturprogramm Daten darüber enthalten, wie die Atmosphäre in der Verpackung gestaltet sein soll und/oder das Etikett der Verpackung gestaltet werden soll. Vorzugsweise ist die Steuerung/Regelung der Lebensmittelverpackungsmaschine so gestaltet, dass diese erst dann gestartet werden kann, wenn die jeweiligen Programme in der Verpackungsmaschine bzw. in der jeweiligen Komponente hinterlegt sind. Für den Fall, dass für eine bestimmte Rezeptur ein bestimmtes Werkzeug benötigt wird, ist ein Starten der Verpackungslinie vorzugsweise erst dann möglich, wenn dieses entsprechende Werkzeug in der Verpackungsmaschine bzw. in der Komponente eingebaut ist.

Im Falle einer Fehlfunktion, setzt die Verpackungsmaschine oder eine andere Komponente der Lebensmittelverpackungslinie eine Fehlermeldung ab. Nach der Behebung des Fehlers wird an dieser Verpackungsmaschine oder anderen Komponente die Lebensmittelverpackungslinie von der Bedieneinheit der fehlerhaften Verpackungsmaschine oder Komponente wieder gestartet.

Dem Fachmann ist verständlich, dass die beschriebenen Gegenstände der vorliegenden Erfindung gleichermaßen für den Fall gelten, dass die Steuerung und Bedieneinheit der Verpackungsmaschine gar nicht in die Verpackungslinie integriert ist, beispielsweise dann, wenn in eine neue Verpackungslinie ausgerechnet eine alte Verpackungsmaschine mit alter Steuerung vorgesehen ist, wobei die alte Steuerung nicht mit der Linie-Regelung/Steuerung kompatibel ist. Für diesen Fall gelten die Beschreibungen gleichermaßen und ähnlich, wobei zum Beispiel dann nur eine Lebensmittelverpackungslinie mit einem Slicer und mindestens einer weiteren stromaufwärts und/oder stromabwärts befindlichen Komponente vorgesehen ist.

Im Folgenden werden die Erfindungen anhand der Figuren eins und zwei erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- Figur 1: zeigt eine erste Ausführungsform der erfindungsgemäßen Lebensmittelverpackungslinie.
- Figur 2: zeigt eine weitere Ausführungsform der erfindungsgemäßen Verpackungslinie.
- Figur 3: zeigt eine weitere Ausführungsform der erfindungsgemäßen Verpackungslinie.

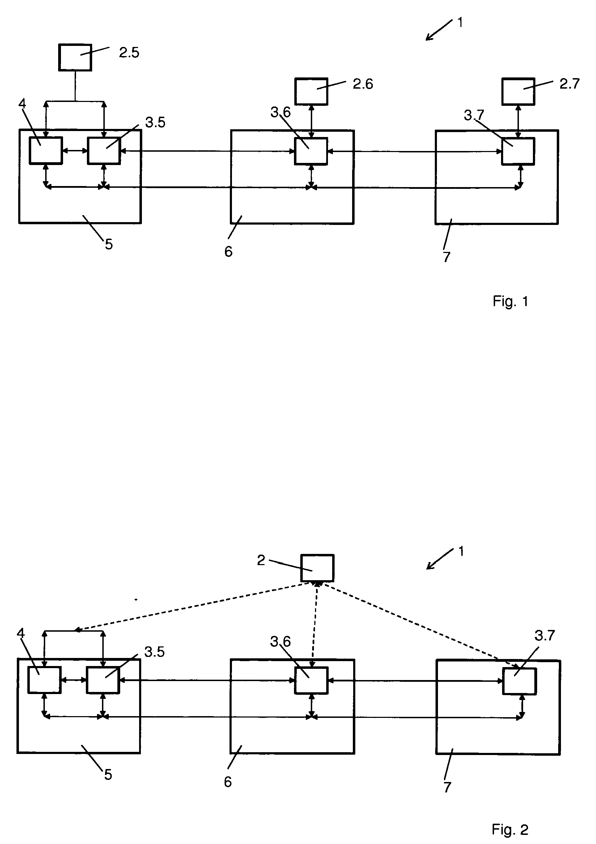

Figur 1 zeigt eine erste Ausführungsform der erfindungsgemäßen Lebensmittelverpackungslinie. Diese weist in dem vorliegenden Fall drei Komponenten 5, 6, 7 auf. Die Komponente 7 ist in dem vorliegenden Fall eine Verpackungsmaschine, insbesondere eine sogenannte Form-Füll-Siegel-Verpackungsmaschine (FFS-Verpackungsmaschine) und die Komponente 5 beispielsweise eine Aufschneidevorrichtung, mit der ein Lebensmittelriegel in Lebensmittelscheiben aufgeschnitten wird, die zu Portionen beispielsweise ä zehn Lebensmittelscheiben konfiguriert werden. Die Komponente 6 ist beispielsweise ein Loader, mit dem aufgeschnittene Portionen in die Verpackungsmulden der Verpackungsmaschine eingelegt werden. Jede Komponente 5, 6, 7 weist eine lokale speicherprogrammierbare Steuerung (SPS) 3.5, 3.6, 3.7 auf. Des Weiteren weist, bei der Ausführungsform gemäß Figur 1, jede Komponente 5, 6, 7 eine Bedieneinheit 2.5, 2.6, 2.7 auf. Darüber hinaus weist die erfindungsgemäße Lebensmittelverpackungslinie 1 eine Linien-Regelung/Steuerung 4 auf. Diese Linien-Regelung/Steuerung 4 kann Teil einer der Komponenten 5, 6, 7 jedoch auch ein separates Bauteil/Baugruppe sein. Wie Figur 1 entnommen werden kann, können zwischen den lokalen SPS 3.5, 3.6, 3.7 Daten und Befehle jeweils bidirektional ausgetauscht werden. Desweiteren ist jede lokale SPS 3.5, 3.6, 3.7 auch mit der Linien-Regelung/Steuerung 4 bidirektional verbunden. Die Linien-Regelung/Steuerung weist keine eigene Bedieneinheit auf. Erfindungsgemäß ist es nun möglich von jeder Bedieneinheit aus die gesamte Lebensmittelverpackungslinie zu steuern, also auch zu starten und/oder zu stoppen. Des Weiteren ist es erfindungsgemäß möglich, von jeder Bedieneinheit aus den Status aller Komponenten 5, 6, 7 der erfindungsgemäßen Lebensmittelverpackungslinie aus zu überprüfen und gegebenenfalls angezeigte Fehler zu quittieren. Tritt beispielsweise ein Fehler an der Verpackungsmaschine 7 auf, kann das Bedienpersonal den Fehler dort beheben und von der Bedieneinheit 2.7 aus die Lebensmittelverpackungslinie erneut starten. Des Weiteren kann von der Bedieneinheit 2.7 aus überprüft werden, ob beispielsweise die Aufschneidevorrichtung 5 ordnungsgemäß funktioniert. Ein Rezeptwechsel kann außerdem von einer der Bedieneinheiten 2.5, 2.6, 2.7 initiiert werden. Dieser Rezeptwechsel wird dann der Linien-Regelung/Steuerung übermittelt, die die entsprechenden Informationen an die jeweiligen Komponenten übermittelt. Des Weiteren kann von der Bedieneinheit 2.5, 2.6, 2.7 eine Rezeptänderung initiiert werden, beispielsweise wenn in einem Rezept ein Fehler vorhanden ist. Diese Rezeptänderung wird dann der Linien-Regelung/Steuerung übermittelt, die die entsprechenden Informationen an die jeweiligen Komponenten übermittelt. Dadurch, dass die Linien-Steuerung/Regelung von jeder Bedieneinheit aus angesprochen werden kann und/oder die erfindungsgemäße Lebensmittelverpackungslinie von jeder Bedieneinheit aus gesteuert, also beispielsweise gestartet und/oder gestoppt werden kann, werden dem Bedienpersonal, beispielsweise im Falle einer Störung der erfindungsgemäßen Verpackungslinie, erhebliche Wege erspart. Soll die erfindungsgemäße Lebensmittelverpackungslinie beispielsweise bei einer Frühstückspause temporär leergefahren werden, so kann ein entsprechender Befehl in eine der Bedieneinheiten 2.5, 2.6, 2.7 eingegeben werden. Die erfindungsgemäße Lebensmittelverpackungslinie ist dann vorzugsweise so programmiert, dass die Komponenten 5, 6 vollständig leergefahren werden d.h. alle in der Aufschneidevorrichtung vorhandenen Lebensmittelriegel werden vollständig zu Portionen aufgeschnitten und ggf. vorhandene Reststücke entsorgt. Danach werden alle vollständigen Portionen, die sich auf dem Loader 6 befinden, in die Verpackungsmulden, die beispielsweise in eine Folienbahn in der Verpackungsmaschine eingeformt worden sind, eingelegt, bis auch der Loader 6 vollständig entleert ist. Unvollständige Portionen, d.h. Portionen mit Untergewicht, werden vorzugsweise entsorgt. Des Weiteren werden alle Verpackungsmulden in der Verpackungsmaschine, in der sich Lebensmittelscheiben befinden, verschlossen, so dass diese während der Frühstückspause nicht kontaminiert werden. Für den Fall, dass die Verpackungsmulden eines Formates nicht vollständig mit Lebensmittelscheiben gefüllt werden können, werden einige Verpackungen als so genannte Leerverpackungen trotzdem mit einer Deckelfolie verschlossen und anschließend verworfen. Nach der Frühstückspause kann die erfindungsgemäße Lebensmittelverpackungslinie dann wieder angefahren werden, indem ein Lebensmittelriegel in die Aufschneidevorrichtung eingelegt und aufgeschnitten wird. Soll die erfindungsgemäße Lebensmittelverpackung hingegen für einen längeren Zeitraum, beispielsweise über Nacht, abgestellt werden, werden nicht nur die Komponenten 5, 6 vollständig leergefahren, sondern auch alle in die Folienbahn eingeformten Verpackungsmulden aus der Verpackungsmaschine entfernt. Ein derartiger vollständiger Stopp der erfindungsgemäßen Verpackungslinie kann auch beispielsweise für einen Formatwechsel eingesetzt werden.

In Figur 2 ist im Wesentlichen die Ausführungsform der Lebensmittelverpackungslinie gemäß Figur 1 dargestellt, mit dem Unterschied, dass in dem vorliegenden Fall alle Komponenten lediglich eine Bedieneinheit aufweisen. Dadurch können erhebliche Verkabelungswege und die jeweiligen Bedieneinheiten eingespart werden. Vorzugsweise handelt es sich bei der Bedieneinheit 2 um eine mobile Bedieneinheit beispielsweise ein Tablett-Computer. Diese Bedieneinheit 2 ist vorzugsweise drahtlos mit der erfindungsgemäßen Lebensmittelverpackungslinie 1 verbunden. Dafür weist die erfindungsgemäße Lebensmittelverpackungslinie vorzugsweise eine Sende-/Empfangseinheit auf, die mit der Bedieneinheit 2 bidirektionale, vorzugsweise drahtlos kommunizieren kann. Von dieser Bedieneinheit 2 aus können alle Komponenten der Lebensmittelverpackungslinie gesteuert, also beispielsweise gestartet und gestoppt werden. Des Weiteren kann der Status jeder Komponente abgefragt und gegebenenfalls Korrekturen an der jeweiligen Komponente vorgenommen werden.

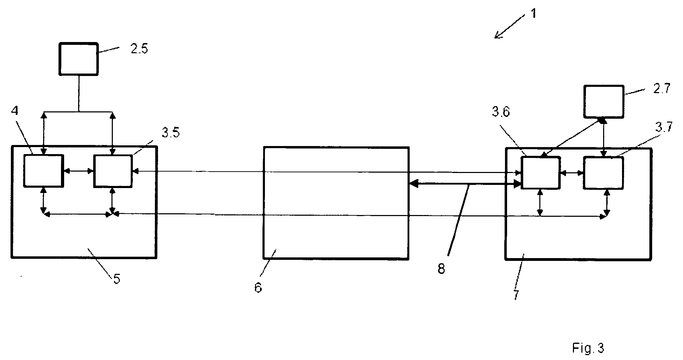

In Figur 3 ist im Wesentlichen die Ausführungsform der Lebensmittelverpackungslinie gemäß Figur 1 dargestellt, mit dem Unterschied, dass in dem vorliegenden Fall für die Komponente 6 keine eigene Steuerung vorgesehen ist. Die Steuerung 3.6 der Komponente 6 ist hier in die Komponente 7 integriert und wird von deren Bedieneinheit 2.7 bedient. Der Daten-/Befehlsaustausch zwischen der Komponente 6 und der Steuerung 3.6 ist durch den Doppelpfeil 8 symbolisiert. Der Fachmann erkennt, dass die Steuerungen 3.6, 3.7 eine Einheit seien können.

### Bezugszeichenliste:

- 1: Lebensmittelverpackungslinie
- 2: Bedieneinheit, mobile Bedieneinheit
- 2.5: Bedieneinheit
- 2.6: Bedieneinheit
- 2.7: Bedieneinheit
- 3.5: lokale Steuerung, lokale Speicher-programmierbare-Steuerung, lokale SPS
- 3.6: lokale Steuerung, lokale Speicher-programmierbare-Steuerung, lokale SPS
- 3.7: lokale Steuerung, lokale Speicher-programmierbare-Steuerung, lokale SPS
- 4: Linien-Regelung/Steuerung
- 5: Komponente der Linie
- 6: Komponente der Linie
- 7: Komponente der Linie, Verpackungsmaschine
- 8: Daten-/Befehlstransfer zwischen der Komponente und der lokalen Steuerung

## Patentansprüche

1. Verpackungslinie, insbesondere Lebensmittelverpackungslinie mit einer Verpackungsmaschine (7) und mindestens einer weiteren Komponente (5, 6), wobei die Verpackungsmaschine (7) und die Komponente (5, 6) jeweils eine lokale Steuerung (3.5, 3.6, 3.7) aufweisen und die Verpackungslinie eine Linien-Regelung/Steuerung (4) aufweist, wobei die Verpackungsmaschine (7) und jede Komponente (5, 6) jeweils eine Bedieneinheit (2.5, 2.6, 2.7) aufweist, **dadurch gekennzeichnet, dass** die Linien-Regelung/Steuerung (4) von mehreren Bedieneinheiten, vorzugsweise von allen (2.5, 2.6, 2.7) aus ansteuerbar vorgesehen ist.

2. Verpackungslinie, insbesondere Lebensmittelverpackungslinie nach Patentanspruch 1, **dadurch gekennzeichnet, dass** von jeder Bedieneinheit (2.5, 2.6, 2.7) Daten von der Verpackungsmaschine und jeder anderen Komponente der Lebensmittelverpackungslinie (7) abrufbar sind.

3. Verpackungslinie, insbesondere Lebensmittelverpackungslinie nach einem der voranstehenden Ansprüche, **dadurch gekennzeichnet, dass** sie eine, insbesondere mobile Bedieneinheit (2) für die Verpackungsmaschine (7) und jede weiteren Komponente (5, 6) aufweist.

4. Verpackungslinie, insbesondere Lebensmittelverpackungslinie nach einem der voranstehenden Ansprüche, **dadurch gekennzeichnet, dass** die lokalen Steuerungen (3.5, 3.6, 3.7) bidirektional Daten und/oder Befehle austauschen.

5. Verfahren zum Betrieb einer Verpackungslinie, insbesondere Lebensmittelverpackungslinie mit einer Verpackungsmaschine (7) und mindestens einer weiteren Komponente (5, 6), wobei die Verpackungsmaschine (7) und jede Komponente (5, 6) jeweils eine lokale Steuerung (3.5, 3.6, 3.7) aufweist und die Verpackungslinie eine Linien-Regelung/Steuerung (4) aufweist, wobei die Verpackungsmaschine (7) und die Komponente (5, 6) jeweils eine Bedieneinheit (2.5, 2.6, 2.7) aufweist, **dadurch gekennzeichnet, dass** mit jeder Bedieneinheit (2.5, 2.6, 2.7) die Linien-Regelung/Steuerung angesteuert wird, um die Verpackungsmaschine und mindestens eine weitere Komponente zu steuern, also auch zu starten und/oder zu stoppen.

6. Verfahren nach Anspruch 5, **dadurch gekennzeichnet, dass** die Verpackungsmaschine (7) und die weitere Komponente (5, 6) in einer bestimmten Reihenfolge gestoppt oder gestartet werden.

7. Verfahren nach einem der Ansprüche 5 oder 6, **dadurch gekennzeichnet, dass** jede lokale Steuerung (3.5, 3.6, 3.7) eine vordefinierte Funktionsabfolge initiiert und/oder steuert.

8. Verfahren nach einem der Ansprüche 5 - 7, **dadurch gekennzeichnet, dass** eine Rezepturänderung von einer beliebigen Bedieneinheit (2.5, 2.6, 2.7) aus durchgeführt wird.

9. Verfahren nach einem Ansprüche 5 - 8, **dadurch gekennzeichnet, dass** die Verpackungsmaschine (7) oder eine andere Komponente eine Fehlermeldung absetzt und dass nach der Behebung des Fehlers an dieser Verpackungsmaschine (7) oder anderen Komponente die Lebensmittelverpackungslinie von der Bedieneinheit (2.5, 2.6, 2.7) der fehlerhaften Verpackungsmaschine (7) oder Komponente (5, 6) wieder gestartet wird.

10. Verfahren nach einem der Ansprüche 5 - 9, **dadurch gekennzeichnet, dass** eine Fehlermeldung an der Verpackungsmaschine (7) oder einer anderen Komponente von einer beliebigen Bedieneinheit (2.5, 2.6, 2.7) aus quittiert wird.

11. Verfahren nach einem der Ansprüche 5 - 10, **dadurch gekennzeichnet, dass** Statusabfragen von der Verpackungsmaschine (7) oder einer anderen Komponente von einer beliebigen Bedieneinheit (2.5, 2.6, 2.7) aus abgefragt werden.

## Claims

1. Packaging line, in particluar a food packaging line, comprising a packaging machine (7) and at least one further component (5, 6), wherein the packaging machine (7) and the component (5, 6) respectively have a local control system (3.5, 3.6, 3.7), and the packaging line has a closed-loop/open-loop line control system (4), wherein the packaging machine (7) and each component (5, 6) respectively have an operator control unit (2.5, 2.6, 2.7), **characterized in that** the closed-loop/open-loop line control system (4) can be activated from a number of operator control units, preferably from all of the operator control units (2.5, 2.6, 2.7).

2. Packaging line, in particular food packaging line, according to Patent Claim 1, **characterized in that** data from the packaging machine and any other component of the food packaging line (7) can be retrieved from each operator control unit (2.5, 2.6, 2.7).

3. Packaging line, in particular food packaging line, according to one of the preceding claims, **characterized in that** it has an operator control unit (2), in particular a mobile operator control unit (2), for the packaging machine (7) and each further component (5, 6).

4. Packaging line, in particular food packaging line, according to one of the preceding claims, **characterized in that** the local control systems (3.5, 3.6, 3.7) exchange data and/or commands bidirectionally.

5. Method for operating a packaging line, in particular a food packaging line, comprising a packaging machine (7) and at least one further component (5, 6), wherein the packaging machine (7) and each component (5, 6) respectively have a local control system (3.5, 3.6, 3.7) and the packaging line has a closed-loop/open-loop line control system (4), wherein the packaging machine (7) and the component (5, 6) respectively have an operator control unit (2.5, 2.6, 2.7), **characterized in that** the closed-loop/open-loop line control system is activated so as to control, that is to say to start and/or stop, the packaging machine and at least one further component, with each operator control unit (2.5, 2.6, 2.7).

6. Method according to Claim 5, **characterized in that** the packaging machine (7) and the further component (5, 6) are stopped or started in a specific sequence.

7. Method according to one of Claims 5 or 6, **characterized in that** each local control system (3.5, 3.6, 3.7) initiates and/or controls a predefined functional sequence.

8. Method according to one of Claims 5-7, **characterized in that** a modification in the formulation is carried out from any desired operator control unit (2.5, 2.6, 2.7).

9. Method according to one of Claims 5-8, **characterized in that** the packaging machine (7) or another component issues a fault message and **in that**, after rectifying the fault, the food packaging line is started again at this packaging machine (7) or other component from the operator control unit (2.5, 2.6, 2.7) of the defective packaging machine (7) or component (5, 6).

10. Method according to one of Claims 5-9, **characterized in that** a fault message on the packaging machine (7) or another component is acknowledged from any desired operator control unit (2.5, 2.6, 2.7).

11. Method according to one of Claims 5-10, **characterized in that** status inquiries of the packaging machine (7) or another component are inquired from any desired operator control unit (2.5, 2.6, 2.7).

## Revendications

1. Ligne d'emballage, en particulier ligne d'emballage de denrées alimentaires avec une machine d'emballage (7) et au moins un autre composant (5,6), la machine d'emballage (7) et le composant (5, 6) comportant respectivement une commande locale (3.5, 3.6, 3.7) et la ligne d'emballage comportant un système de régulation/commande de ligne (4), la machine d'emballage (7) et chaque composant (5, 6) comportant respectivement une unité de commande (2.5, 2.6, 2.7), **caractérisée en ce que** le système de régulation/commande de ligne (4) est prévu pouvant être activé par plusieurs unités de commande, de préférence par toutes (2.5, 2.6, 2.7).

2. Ligne d'emballage, en particulier ligne d'emballage de denrées alimentaires selon la revendication 1, **caractérisée en ce que** des données de la machine d'emballage et de chaque autre composant de la ligne d'emballage de denrées alimentaires (7) peuvent être interrogées par chaque unité de commande (2.5, 2.6 , 2.7).

3. Ligne d'emballage, en particulier ligne d'emballage de denrées alimentaires selon l'une quelconque des revendications précédentes, **caractérisée en ce qu'**elle comporte une unité de commande (2) en particulier mobile pour la machine d'emballage (7) et chaque autre composant (5,6).

4. Ligne d'emballage, en particulier ligne d'emballage de denrées alimentaires selon l'une quelconque des revendications précédentes, **caractérisée en ce que** les commandes locales (3.5, 3.6, 3.7) échangent de manière bidirectionnelle des données et/ou des ordres.

5. Procédé pour faire fonctionner une ligne d'emballage, en particulier ligne d'emballage de denrées alimentaires avec une machine d'emballage (7) et au moins un autre composant (5, 6), la machine d'emballage (7) et chaque composant (5, 6) comportant respectivement une commande locale (3.5, 3.6, 3.7) et la ligne d'emballage comportant un système de régulation/commande de ligne (4), la machine d'emballage (7) et le composant (5, 6) comportant respectivement une unité de commande (2.5, 2.6, 2.7), **caractérisé en ce que** le système de régulation/commande de ligne peut être activé avec chaque unité de commande (2.5, 2.6, 2.7) pour piloter ainsi que mettre en marche et/ou arrêter la machine d'emballage et au moins un autre composant.

6. Procédé selon la revendication 5, **caractérisé en ce que** la machine d'emballage (7) et l'autre composant (5, 6) sont arrêtés ou mis en marche dans un certain ordre.

7. Procédé selon l'une quelconque des revendications 5 ou 6, **caractérisé en ce que** chaque commande locale (3.5, 3.6, 3.7) initie et/ou commande une suite de fonctions prédéfinie.

8. Procédé selon l'une quelconque des revendications 5 - 7, **caractérisé en ce qu'**une modification de recette est exécutée à partir de n'importe quelle unité de commande (2.5, 2.6, 2.7).

9. Procédé selon l'une quelconque des revendications 5 - 8, **caractérisé en ce que** la machine d'emballage (7) ou un autre composant émet un message d'erreur et **en ce qu'**après élimination de l'erreur sur cette machine d'emballage (7) ou cet autre composant, la ligne d'emballage de denrées alimentaires est à nouveau remise en marche par l'unité de commande (2.5, 2.6, 2.7) de la machine d'emballage (7) ou du composant (5, 6) défectueux.

10. Procédé selon l'une quelconque des revendications 5 - 9, **caractérisé en ce qu'**un message d'erreur est acquitté sur la machine d'emballage (7) ou un autre composant par n'importe quelle unité de commande (2.5, 2.6, 2.7).

11. Procédé selon l'une quelconque des revendications 5 - 10, **caractérisé en ce que** les interrogations d'état de la machine d'emballage (7) ou d'un autre composant sont posées à partir de n'importe quelle unité de commande (2.5, 2.6, 2.7).
